# EUROPEAN PATENT SPECIFICATION

(11) **EP 0 808 268 B1**
(45) Date of publication and mention of the grant of the patent: **21.07.1999**
(21) Application number: 96902245.8
(22) Date of filing: 19.02.1996
(51) Int. Cl.: B62H 5/02

(54) **THEFT SAFEGUARDING FOR A BICYCLE**
DIEBSTAHLSICHERUNGSSYSTEM FÜR FAHRRAD
SYSTEME ANTIVOL POUR BICYCLETTE

(30) Priority: 21.02.1995 DK 19095
(43) Date of publication of application: 26.11.1997
(73) Proprietor: Lindved, Per, 2625 Vallensbaek (DK)
(72) Inventor: Lindved, Per, 2625 Vallensbaek (DK)
(74) Representative: Holme, Edvard
(86) International application number: DK9600072
(87) International publication number: WO9626102

(56) References cited:
- CH-A- 209 487
- FR-A- 781 993
- GB-A- 2 274 438
- US-A- 2 576 773

## Description

The invention relates to a theft safeguarding for a bicycle with a frame part and a handlebars part which is mounted such that it can be turned about an axis in relation to the frame part, whereby the theft safeguarding comprises a first and a second safety part, which are mounted on the frame part and on the handlebars part, respectively, and also a lock on one of the safety parts for pivot firm being able to lock the second safety part by shooting a lock-pin into a lock hole in said part, whereby there on the two safety parts are opposite safety faces being situated in a surface of rotation each with the axis in common with the axis of rotation of the handlebars part, and that there on the second safety face is formed at least one arched curved tongue and on the first safety face is formed an arched curved groove which, in relation to said tongue, is complementary formed, which groove is open at both ends and can engage with the tongue and prevent the two safety parts from being axially removed from each other, and whereby the bicycle has an upper and a lower ball bearing by which the handlebars stem of the handlebars part pivotally is journalled in the bearing tube of the frame part.

The increasing number of thefts of bicycles is a serious social problem, which strains the police and costs the insurance companies a lot of money. For the individual person it will always be a very unpleasant experience to have one's bicycle stolen. Over the years, great efforts have therefore been made to put an end to these thefts, and they have resulted in development of different kinds of locks to lock the bicycle, when the owner puts it away.

Of these bicycle locks particularly one lock can be mentioned which used to be very common. This lock is placed on the bicycle frame at the rear fork and has a clamp, which can be shot in between the spoke of the rear wheel and prevent this wheel from turning. Many of these rear wheel locks are, however, easy to break up but even if a bicycle thief does not directly makes attempt to break up the lock, he can nevertheless easily remove the bicycle simply by lifting up the rear wheel and steer with the front wheel.

Greater security can be obtained by means of a wire, the ends of which can be locked together with a wire lock, so that the wire forms a loop, which when locking the bicycle simultaneously is made to close round e.g. the frame of the bicycle and a solid object. In this way the bicycle is chained to the object, and a thief will therefore first have to cut or saw through the wire before he can take possession of the bicycle. This will, normally, be a difficult process with the common tools. The solution will therefore provide greater security against theft than said rear wheel lock, but on the other hand, it is rather difficult to operate, and to this can be added that it is not everywhere it is possible to find a sufficiently reliable solid object to which a bicycle can be locked. The existing possibilities for efficient locking of a bicycle by means of a wire are therefore limited.

Cars will normally be secured from theft by means of a steering-wheel lock. When the steering-wheel lock is activated it is impossible to steer the car. A thief will, therefore, not get very far, even if he will succeed in getting the engine started.

Similar locks in the shape of front wheel locks are also known from bicycles. These locks are in themselves better than the rear wheel locks, since it is outmost inconvenient to remove a bicycle which cannot be steered. The bicycle has virtually to be carried away. The front wheel locks have, however, not had a wide distribution. This is first and foremost due to the fact that up till now no lock construction has been suggested, which fulfils the demands which necessarily have to be made on that the lock is difficult to break up.

From the patent publication DE 3439412 such a front wheel lock is known, in which the upper of the two ball bearings, which serve the purpose of suspending the handlebars stem of the handlebars part pivotally in the bearing tube of the frame part, is formed as a front wheel lock. The lower part of the bearing bushes of this ball bearing has a protruding collar with a number of recesses regularly scattered along the circumference. On a protruding on the upper bearing bush there is furthermore placed a horizontal cylinder lock with a latch which can be turned into mesh with one of the recesses when the lock is being operated. Thereby the front wheel is locked and cannot be turned since the latch is stopped by the side walls of the recess. The latch can, however, with light blows with e.g. a hammer or by wresting or hitting the handlebars stem upwards in the bearing tube, without greater difficulty be brought out of turn diagonally to the protruding collar. This construction is, consequently, not able to provide the requested security against thefts.

From the patent publication WO/83/01761 a different front wheel lock is known. In this case it is a vertically placed lock, which is fixed to the handlebars stem. When the lock is operated a lock pin is shot down into an oblong lock hole being placed in a fitting which again is fixed to the frame. The handlebars stem has now been locked in relation to the frame, and the front wheel can no longer be used in steering of the bicycle. This lock can, however, also rather easily be broken up by blowing or wresting the handlebars stem and then pull the lock-pin vertically out of the lock hole. A couple of protruding pins, which are placed on the lock-pin and in the locking position of this pin and each is turned under the hole edge in the oblong lock hole, are however not sufficient solid to efficiently being able to prevent the lock pin from being pulled out of the lock hole.

From the document GB-A-22 74 438 is furthermore known a theft guard arrangement having a first and second safety parts. The first of these safety parts is containing the upper bearing bush of the ball bearing. This construction is rather complicated.

Common to said locks is, that they have an open construction allowing direct admittance to the proper lock parts which therefore immediately can be worked up with easily available tools as for example hacksaws, chisels and wire-cutters. By the conventional locks it is, besides the resistance of the materials used, more or less only the wall thickness of the lock parts which decides how long it will take before the lock is broken up. For practical reasons it is, however, necessary to dimension the lock parts with limited wall thickness, and this results in the fact that these known locks are relatively easy and quick to break up. Neither do said locks provide secondary safety against theft of the bicycle as regards to making the bicycle unfit to ride on or pull away, when attempts are made to break up the lock. When the lock has been broken up, the bicycle is in fully roadworthy condition.

The known lock constructions serve only the purpose of securing the bicycle itself from being stolen. In no case are they at the same time constructed to, in a way that secures against theft, to fix bicycle accessories to the bicycle or attend to other functions attached to the use of a bicycle.

As regard to remedying the shortcomings, which the known constructions such are suffering from, a first object of the invention is to provide a theft safeguarding of the type mentioned in the opening paragraph in the shape of a front wheel lock, which is easy to operate and provides greater safety from being broken up than known up till now.

Another object of the invention is to provide a theft safeguarding, which secondarily secures a locked bicycle from theft by making the bicycle unfit for riding on or pulling away, when the lock has been broken up.

A third object of the invention is to provide a theft safeguarding, which also can be used for fixing other objects to the bicycle and secure bicycle accessories from being removed from this.

A fourth object of the invention is to provide a theft safeguarding, which also can be used for other purposes which have relation to the use of a bicycle than merely secure it from theft.

The new and unique according to the invention, in which this is obtained, is the fact in that the first and the second safety part are formed integrally with the upper and lower bushes, respectively, of the lower ball bearing of the steering column.

This construction of the safe guard arrangement is very simple and at the same time very effective.

A thief cannot break the two safety parts from each other and break up the lock when the bicycle is locked. At the same time the parts which produce the lock function, e.g. the lock-pin lies well hidden deep in between the safety parts, where there are almost inaccessible for working up with ordinary tools. In order to get access to these parts, a thief will therefore first have to remove the surrounding material in the lock, and that is outmost difficult and takes a long time. If a thief, nevertheless, finally should succeed in getting the lock broken up, all his efforts would be in vain due to the fact that now the bicycle cannot be used, because the steering function is destructed. In every respect the bicycle is efficiently secured from theft when it is locked with the theft safeguarding according to the invention.

The surfaces of rotation can for instance by double arched curved or conical whereby the construction obtains great strength. When the faces are diverging downwards the faces are furthermore automatically drained from rain water. A particularly simple construction is obtained when each of the two surfaces of rotation consists of a plane.

There can expediently be placed a single tongue/groove set at the outer periphery of the safety faces, at which periphery it would be impossible for a thief to penetrate with a tool to break the safety parts from each other and break up the lock. In placing another tongue/groove set at the inner periphery of the safety faces the two safety parts are held unbreakable together, when the bicycle is locked. If they have to be separated in order to break up the lock, the safety parts will more or less have to be destroyed completely, and that requires efforts from advanced tools which a thief normally does not dispose of.

The handlebars stem of the handlebars part is pivotally journalled in the bearing tube of the frame part be means of an upper and a lower ball bearing. By letting the two safety parts each have one of the two bearing bushes of either the upper or the lower of these ball bearings, a particular simple constructions is obtained with parts, which as standard components are suitable to form part of the normal production of bicycles.

This construction can also be used for the very high number of bicycles already existing, but it will require that the bicycle will have to be partly taken apart, and that the existing bearing bushed will have to be exchanged with said safety parts with integrated bearing bushes. By another embodiment according to the invention the two safety parts can therefore advantageously be adapted to be clamped to the bearing tube and the front fork of the handlebars part, respectively, so that the theft safeguarding easily can be mounted on an existing bicycle without the bicycle to that respect necessarily has to be taken more or less apart and afterwards has to be reassembled.

It is, however, important that a thief cannot remove the theft safeguarding, when this is in its locking position. In order to prevent this efficiently, the first safety part can be clamped to the bearing tube of the frame part by means of a clamp with legs, which are accommodated in mounting holes in this safety part and is screwed into their mounting hole each by a screw joint. In order to make this screw joint inaccessible for a thief there can be placed a cross pin or -screw at the end of the screw joint. A thief will not, however, be able to put in a tool, e.g. a screwdriver and loosen up the screw joint.

According to the invention the theft safeguarding can also be used for functions which go beyond the purely theft safeguarding-wise. As an example to this can be mentioned, that especially the one of the two safety parts, which are mounted on the handlebars part, can be adapted as a lamp body. The really theft safeguarding function can also be made useful in this case by providing the body with a source of current supply, e. g. a battery or an accumulator with a flap, which in mounted condition is situated between the open lock-pin and the lock hole and is on the level line with this. When being in the locking position the source of current supply is then also secured from theft, while the source of current supply by locking up immediately can be taken out in order to be replaced or recharged, respectively. At the same time as being theft safeguarded in the locking position the connection of the source of current supply with the lamp can advantageously be interrupted so that the lamp cannot lighten.

The theft safeguarding according to the invention can also be used to fix other objects to the bicycle. These objects can e.g. be accessories which thereby are secured from being removed from the bicycle. Correspondingly a lock cable can, in the shape of for example a chain or a wire to chain the bicycle to a stationary object, be fixed to the bicycle by means of the theft safeguarding.

For the last-mentioned purpose the lock cable can, at least at one end, have an preferable cylindrical lock-pin with a stem and a larger head placed on the outer side of the stem. In the first and second safety part there can furthermore be formed a first and a second through-opening, both of which having a larger diameter than the head of the lock-pin and are flush with each other in an angular position where the two safety parts have not yet reached the locking position, so that the lock-pin can be shot in between both through-openings at one time with the head on the other side of the rear of these. The rear through-opening passes furthermore into a arched curved slit with a width being greater than the diameter of the stem and smaller than the diameter of the head, and when the locking position has been reached the lock-pin will therefore at the same time be kept locked in the theft safeguarding. When a bicycle is put away close to a suitable solid object, the owner can merely pull the cable around the object and lock its end with the theft safeguarding, simultaneously with that the safeguarding is being locked.

The invention will be explained more fully by the following description of an embodiment, which just serves as an example, with reference to the drawing, in which,
Fig. 1 shows a section of the front part of a bicycle with a theft safeguarding according to the invention,
Fig. 2 shows in a larger scale the same, but seen partly in a vertical section,
Fig. 3 shows the same, seen in perspective, partly in section,
Fig. 4A, B shows, seen in perspective, a second embodiment for a theft safeguarding according to the invention in locked and unlocked position, respectively,
Fig. 5A, B shows, seen in perspective, a third embodiment for a theft safeguarding according to the invention in locked and unlocked position, respectively,
Fig. 6 shows in a perspective explosive picture a fourth embodiment for a theft safeguarding according to the invention with the end of a cable serving for chaining the bicycle to a solid object,
Fig. 7 shows, seen from above, a detail which illustrates how the theft safeguarding is locking up the end of the cable,
Fig. 8 shows in a perspective explosive picture a fifth embodiment for a theft safeguarding according to the invention with a bicycle lamp, and
Fig. 9 shows the theft safeguarding shown in fig. 8 mounted on a bicycle.

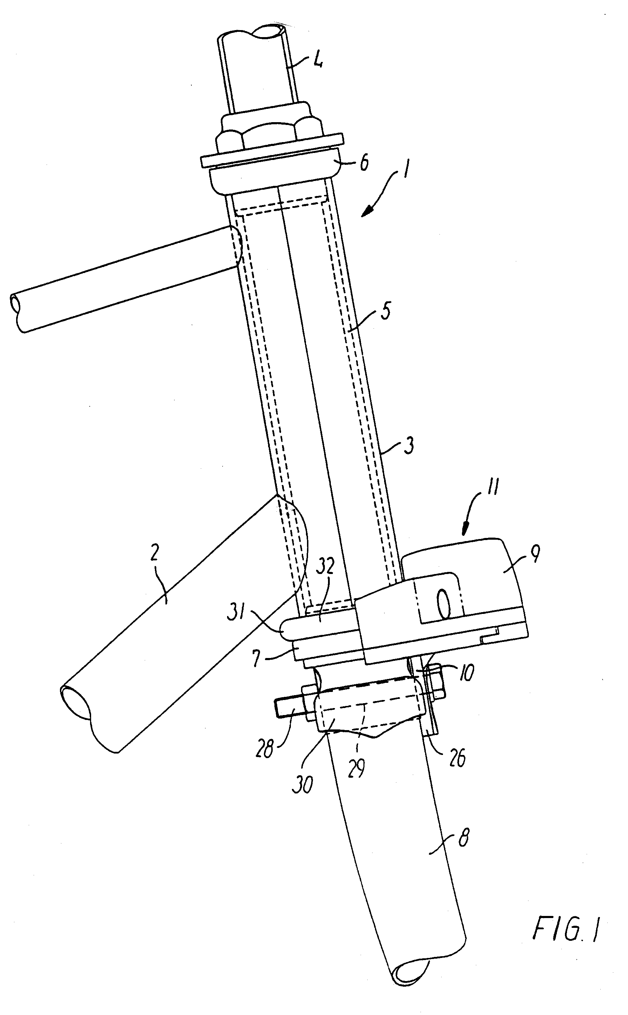

Of the above named figures is fig. 1-5 and 8 with the corresponding description not covered by claim 1.

In fig. 1 can be seen a fragment of the front part of a bicycle 1. The bicycle has a frame 2 with a bearing tube 3 for accommodating the handlebars stem 5 of a handlebars part 4, which in the figure is shown with a broken line. The handlebars stem is pivotally journalled in the bearing bush 3 by means of an upper ball bearing 6 and a lower ball bearing 7 and is below this connected with the front fork 8 of the bicycle.

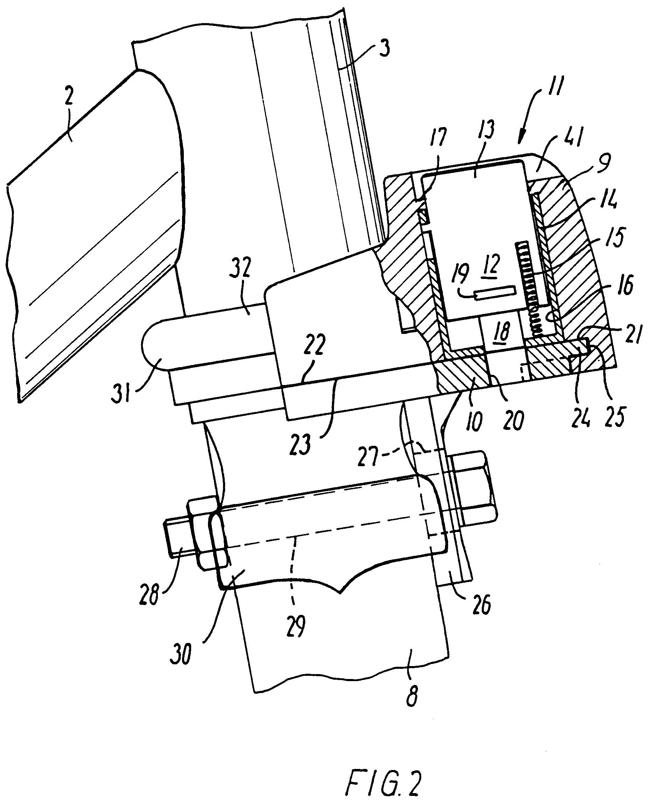

On the frame 2's bearing tube 3 there is mounted a first safety part 9 and on the handlebars part 4's front fork 8 a second safety part 10. The two safety parts 9, 10 describes a pivoting movement in relation to each other, when the handlebars part is turned in relation to the frame, like it continuously is happening during the driving, and together they make a theft safeguarding 11, which can be seen in a larger scale in fig. 2.

This theft safeguarding comprises a cylinder lock 12 which is placed in the first safety part 9. The lock 12 has a cylinder 13, which is displaceable placed between an upper and a lower position in a locking house 14. A pressure spring 15 serves the purpose of keeping the cylinder in its upper position when the bicycle is in use and meant to be unlocked. This position is in the following denoted the driving position. The locking house 14 is again placed in a hole 16, which at the top ends up in a collar 17 for fixing the locking house in the first safety part 9.

At the bottom the cylinder 13 has a lock-pin 18 and a sideways operating latch 19. The second safety part 10 has a lock hole 20 which is flush with the lock-pin 18 when the to safety parts 9, 10 are turned into that position in relation to each other where the theft safeguarding can be locked. This position is in the following called the locking position.

When the bicycle is to be locked, the theft safeguarding is turned to the locking position and the cylinder 13 is pressed down, whereby the lock-pin 18 is shot down into the lock hole 20, and the latch 19 jumps into a recess 21 in the locking house 14 to keep the cylinder in its lower position against the pressures from the spring 15. The two safety parts 9, 10 now cannot be turned in relation to each other. The bicycle is locked.

The first safety part 9 has a first safety face 22, and the second safety part 10 a second safety face 23. The two safety faces 22, 23 are placed with a small distance between them to prevent penetration of tools. The distance must, however, be so large that the two faces are free of each other when they mutually turn during the driving, even if the handlebars stem 5 is journalled with some play in the frame 22's bearing tube 3.

Usually, a thief has ordinary tools at his disposal, as for example a hammer and a chisel. A thief would be able to use such simple pieces of tools in trying to break up the lock by hitting the chisel in between the safety faces 22, 23 with the hammer, and thereby trying to break the safety parts 9, 10 from each other to such an extent that the lock-pin 18 releases from the lock hole 20.

In order efficiently to deprive the thief this possibility for violating the theft safeguarding and set it out of function there is on the second safety part 10 along its outer periphery formed an arched curved tongue 24, which extends radially outwards in continuation of the second safety face 23. On the first safety part 9 there is in continuation of the first safety face 22 furthermore formed a corresponding arched curved groove 25. The tongue 24 will at least in the locking position engage the groove 25 and thereby ensure that the two safety parts cannot be broken apart with the ordinary tools.

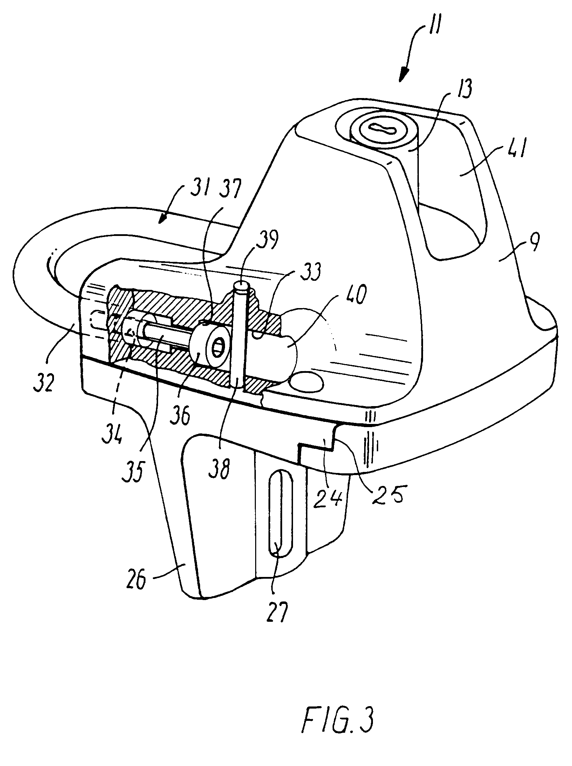

The second safety part 10 has a downwards turning flap 26 with an oblong hole 27, which can be best seen in fig. 3. This safety part 10 is clamped to the front fork 8 by means of a screw 28, which goes through the hole 27 and a middle hole 29 in the cross piece 30 of the front fork. The screw 28 can be the same screw which is used for mounting a hand brake (not shown) when such is available.

In this case the second safety part is thus only fixed on the front fork with just one single screw. A thief would therefore, other things being equal, quickly being able to remove the second safety part by loosening the screw 28. But even without this screw a thief would not be able to remove the second safety part, which namely due to the engagement between the tongue 24 and the groove 25 neither can be pulled downwards nor radially outwards. The locking of the theft safeguarding is kept intact.

The first safety part is clamped to the bearing tube 3 by means of a clamp 31 with legs 32 extending into a mounting hole 33 each in the first safety part. As shown in fig. 3 each clamp leg 32 has a screw hole 34 and in each mounting hole there is a screw 35 for pulling the legs of the clamp into the mounting holes 33 and in this process the head 36 of the screw is abutting an inner chest 37 in the mounting hole. By fastening the screws 35 the first safety part can be clamped securely to the bearing tube 3.

Each screw 35 is fastened from outside by means of a key which is led into its screw head 36 through the open mounting hole 33. When the safety part 9 is fastened, a pin 38 of e.g. hardened steel is shot into a pin-hole 37 which extends across the mounting hole between the screw head 36 and the mouth 40 of the mounting hole. The pins efficiently prevent a thief from being able to have access with a key and loosen up the screws 35. A thief has no possibility of removing the pins by pulling them out. There is nothing to catch hold of. Neither will a thief be able to knock the pins out when the bicycle is locked. This is prevented by the underlying safety face on the second safety part. However, it will be possible to knock the pins out when the two safety parts are turned an appropriate angle in relation to each other and then the theft safeguarding can, if so wished, be demounted.

As shown in fig 2 and 3 the cylinder 13 of the lock 12 is protected by a collar 41, which extends up around the cylinder on the three sides of this. The collar protects the cylinder from unintentionally being pushed down and locking the theft safeguarding during the driving, whereby the handlebar would be able to lock and the rider would loose control of the bicycle with the risk of being hurt.

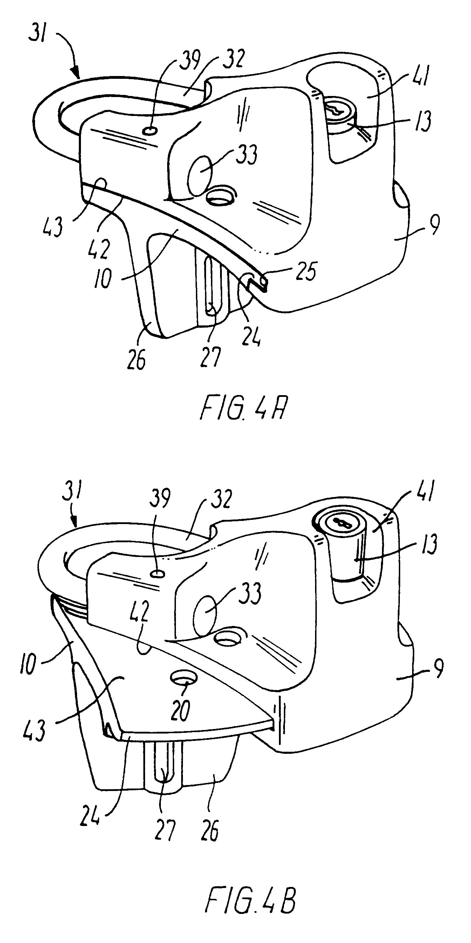

In fig. 1 - 3 the safety parts 22 and 23 are plane. This construction is especially simple and cheap. The second embodiment of a theft safeguarding shown in fig. 4A, B according to the invention corresponds mainly to the one shown in fig. 1 - 3 and therefore the same reference numerals has been used for similar parts. But in this case the two safety parts 42 and 43 are double arched curved and therefore strong against external influences. The parts diverge expediently downwards so that rain water automatically are drained from the parts.

Fig. 4A shows the theft safeguarding in locking position with the cylinder pressed down, and fig. 4B shows the theft safeguarding in driving position with the cylinder in the upper position.

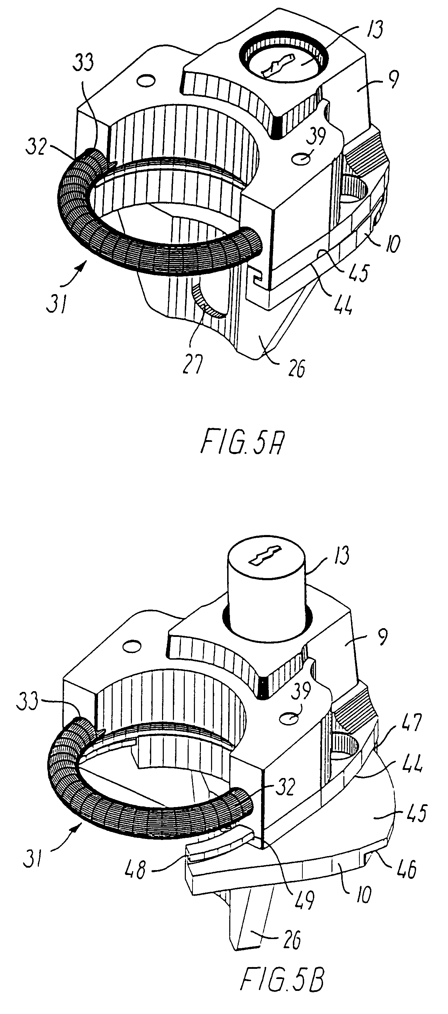

Fig 5A, B show a third embodiment of a theft safeguarding according to the invention. This embodiment is also corresponding to the one shown in fig. 1 - 3 and therefore the same references numbers are used for similar parts. In this case there is no collar to protect the cylinder 13 which therefore is freely accessible from all sides.

The first safety part 9 has a plane safety part 44 and the second safety part 10 a second, equally plane safety part 45. This embodiment has, compared to the above-mentioned embodiments, the extra advantage that the safety parts 9, 10 besides a tongue/groove-set 46, 47 at the outer periphery of the safety parts also has a second tongue/groove-set 48, 49 at the inner periphery of the safety parts. By means of this construction the theft safeguarding can refuse every attempt to break the safety parts from each other with ordinary tools. Even if the screw through the oblong hole 27 in the downwards turning flap 26 of the second safety part 10 is removed completely, the two safety parts 9, 10 will continue to be unbreakable kept together in the locking position of the two groove-sets 46, 47 and 48, 49. The handlebars cannot be turned.

Said embodiments of a theft safeguarding according to the invention are primary meant for mounting on the existing bicycle park. However, they are also suitable for being an element of the production of new bicycles which in that case already beforehand will be provided with such a theft safeguarding.

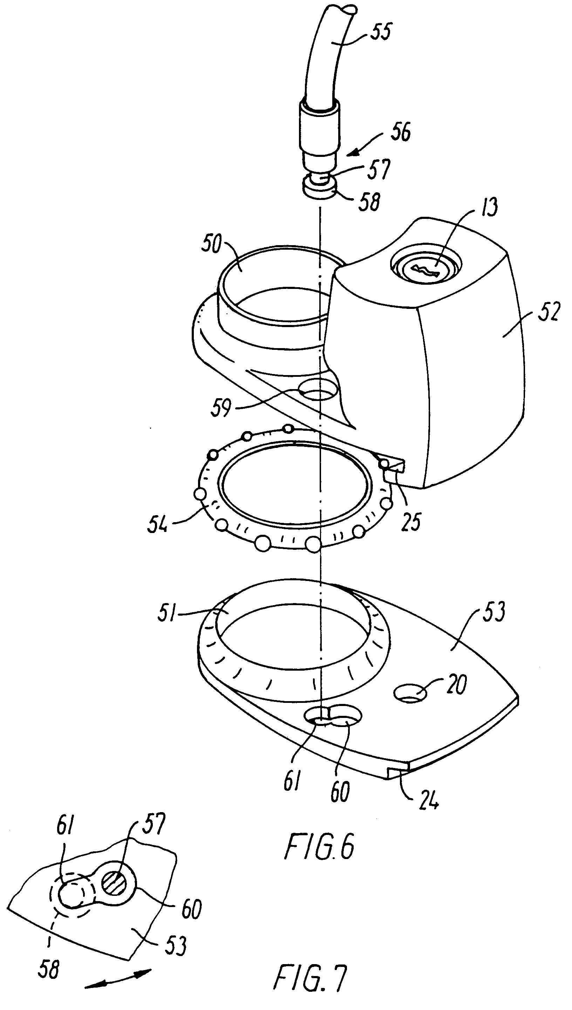

By means of the embodiment of a theft safeguarding according to the invention shown in a perspective explosive picture in fig. 6 considerable advantages are obtained when it is possible already during the production to build in a theft safeguarding in the bicycle.

On a bicycle there will, as seen in fig. 1, normally always be an upper and a lower ball bearing 6, 7. In fig. 6 the bearing bushes 50, 51 are used advantageously in the lower ball bearing as integrated parts of the safety parts 52, 53.

Thereby an particularly solid and at the same time cheap construction is obtained.

When the bicycle is assembled, the bearing bushes 50, 51 function with the intermediary ball ring 54 in the usual manner as the lower bearing bush. The first safety part 52 is then firmly connected with the frame, while the second safety part 53 is firmly connected to the handlebars part and follows the turning movements of said part during the driving.

The safety parts 52, 53 can besides be constructed in any of the previously said methods which only serve by way of example. Instead of using the lower bearing ball of the bearing tube, the upper bearing ball can just as well be used.

Fig. 6 also shows a section of a lock cable 55 to chain the bicycle to a stationary object (not shown). The lock cable, which can be a wire, has at its end a lock-pin 56 with a stem 57, which ends up in a larger head 58. The first safety part 52 has a through-opening 59 with a diameter which is equal to or a little larger than the diameter of the head 58. In the second safety part there is a through-opening 60 with the same or approximately the same diameter as the through-opening 59. The two through-openings 59, 60 are flush with each other in a position which is a little angular displaced in relation to the locking position. As shown in fig. 7 the through-opening 60 ends in the opposite direction of the lock hole 20 up in a slit 61, which runs in an arch curve with the same axis as the axis of rotation of the handlebars part. The slit 61 has a width which is smaller than the head 58, but larger than the stem 57.

The other end of the lock cable is firmly mounted on the bicycle. When the bicycle is to be chained to a stationary object the cable is pulled around this, and the lock-pin is led transversely through the two passage openings 59, 60, which by turning the handlebars part in advance are brought into positions which are flush with each other. When the head 58 has arrived the other side of the safety part 53 this part is turned further on to the locking position, whereby the lock-pin 56's stem is shot into the slit 61 (fig. 7) which therefore must have a sufficient length for being able to reach the locking position. As this slit has a width which is smaller than the diameter of the head 58, the cable cannot be withdrawn from the theft safeguarding. The cable 55 is safety locked when the theft safeguarding is locked, and the bicycle is thereby kept chained to the stationary object.

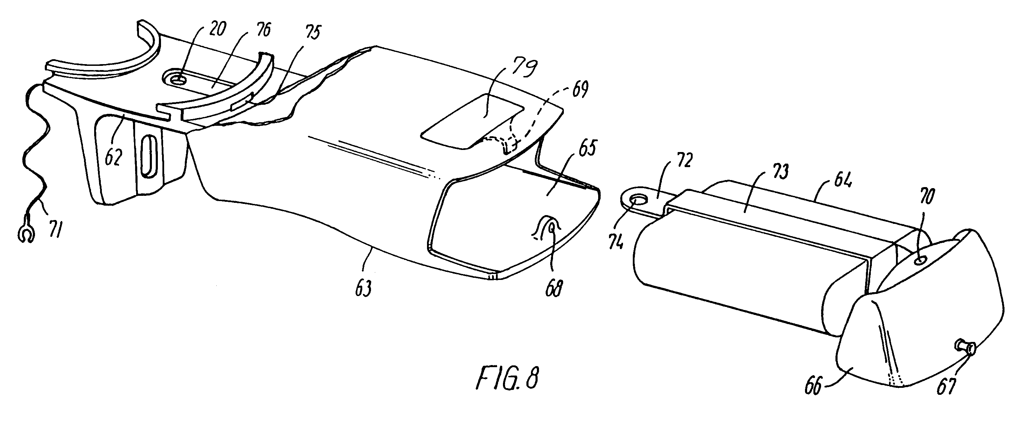

Fig 8 shows in perspective an explosive picture of a particular embodiment of the lower safety part 62, which in this case has an extension, which forms a lamp body. The lamp is driven by an accumulator 64 which can be led into the lamp body through a front opening 65. When the accumulator is in its place the front opening is closed with a lamp glass 66 which is secured with a snap lock 67 in a hole 68 of the lamp body. At the top of the lamp body 63 there is furthermore a transparent plastic plate 79 which has a flap 69 with a polished terminal surface for receiving the light from a hole 70 in the lamp glass and create back light for a display. A wire 71 is leading to a rear light (not shown) which also is provided with energy from the accumulator.

At the inmost end the accumulator has a flap 72 which makes the end of a clamp 73 which encircles the accumulator longitudinally. When the accumulator is in its place in the lamp body, the flap 72 projects via an opening 75 and a track 75 into the safety part 62 so that the hole of the flap 72 is flush with the lock hole 20.

When the theft safeguarding is locked by shooting the lock-pin 18 into a lock hole 20 (fig. 2) the lock-pin 19 is at the same time shot through the hole 74 of the flap 72. The accumulator can therefore not be removed by an unauthorised person when the bicycle is locked. By unlocking the bicycle the accumulator can, however, straight away be removed to be recharged. In the locking position the lock-pin will also actuate an electrical button (not shown) so that the current connection is interrupted. When the bicycle is locked the lamp consequently cannot unintentionally be leaved while emptying the accumulator or the battery for current.

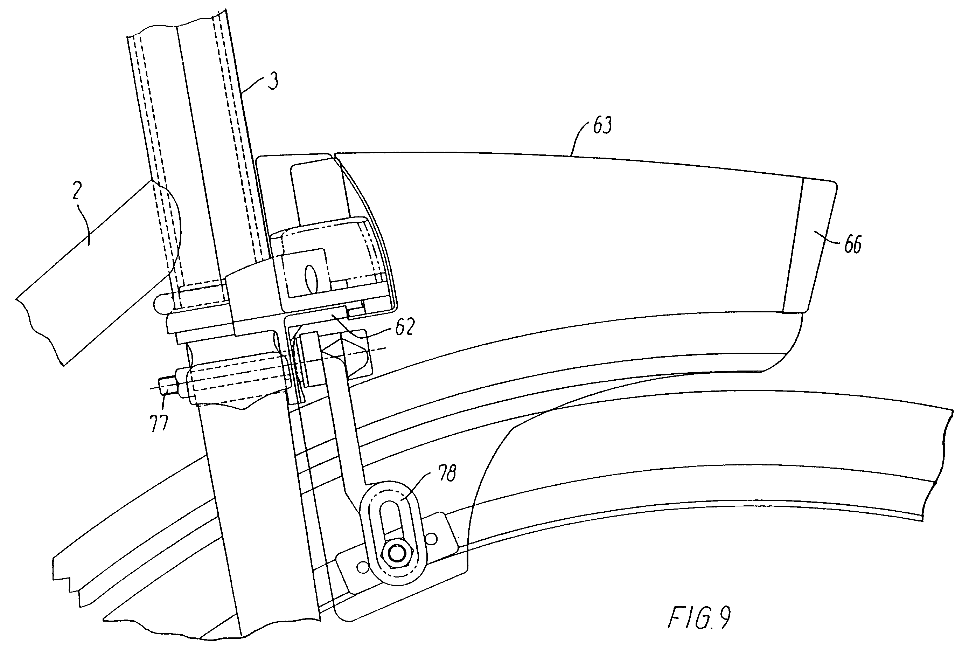

Fig. 9 shows the construction from fig. 8 mounted on a bicycle. From the figure can also be seen how the same screw 77 expediently is used for simultaneous screwing on the second safety part 62 and the handbrake 78.

Besides the accumulator there can in the lamp body also be build in other electronical modules, which can be theft safeguarded in a similar way as in the case of the accumulator. As examples to this can be mentioned a burglar alarm and a bicycle computer.

The embodiments for the tongue/groove-set shown on the drawing and described above must only be taken by way of example as they can have any elaboration which are suited to take up the axial forces, which in the locking position could act between the two safety parts. In this way the tongue/groove-set can for example be T-tracks or dovetail joints.

The safety parts do not have to be coherent but can especially at a distance from the periphery be broken in order to expediently form a recess in the safety parts.

## Claims

1. Theft safeguarding for a bicycle (1) with a frame part (2) and a handlebars part (4) which is mounted such that it can be turned about an axis in relation to the frame part (2), whereby the theft safeguarding comprises a first and a second safety part (52,53), which are mounted on the frame part (2) and on the handlebars part (4), respectively, and also a lock (12) on one of the safety parts (52) for pivot firm being able to lock the second safety part (53) by shooting a lock-pin (18) into a lock hole (20) in said part, whereby there on the two safety parts (52,53) are opposite safety faces (22,23) being situated in a surface of rotation each with the axis in common with the axis of rotation of the handlebars part (4), and that there on the second safety face is formed at least one arched curved tongue and on the first safety face is formed an arched curved groove (25) which, in relation to said tongue, is complementary formed, which groove is open at both ends and can engage with the tongue (24) and prevent the two safety parts (52,53) from being axially removed from each other, and whereby the bicycle (1) has an upper and a lower ball bearing (6,7) by which the handlebars stem of the handlebars part pivotally is journalled in the bearing tube of the frame part, **characterised** in that the first and the second safety part (52,53) are formed integrally with the upper and lower bushes (50,51), respectively, of the lower ball bearing (7,54) of the steering column (3).

2. Theft safeguarding according to claim 1, **characterised** in that each of the two surfaces (22,23) of rotation consists of a plane.

3. Theft safeguarding according claim 1 or 2, **characterised** in that there to the theft safeguarding belongs a locking cable (55) in the shape of e.g. a chain or a wire for chaining the bicycle to a stationary object, and that the locking cable at least at one end has a locking means (57,58)) for letting through a passage hole (59) in the first safety part (52), whereby the second safety part (53) and the locking mean (57,58) are adapted in such a way that the locking means can be led through a passage hole (60,61) in the second safety part (53), when the two safety parts mutually are angular displaced from the locking position, but not are able to be withdrawn when the two safety parts subsequently are turned into the locking position.

4. Theft safeguarding according to claim 3, **characterised** in that the locking means (57,58) consists of a preferably cylindrical lock-pin with a stem (57) and a larger head (58) placed at the end of the stem, that there in the first and second safety parts (52,53), respectively, is formed a first and a second through-opening (59,60), both of which having a larger diameter than the head (58) of the lock-pin and which are flush with each other in an angular position where the two safety parts (52,53) not yet have reached the locking position, that the second through-opening (60) ends up in an arched curved slit (61) with a width which is larger than the diameter of the stem (57) and smaller than the diameter of the head (58), and that the slit (61) at least has such a length that its closed end in the locking position is abutting the stem (57) of the locking pin which has been led through the through-openings (59,60), when this stem (57) is abutting the side turning opposite to the slit (61) in the first through-opening (59).

## Patentansprüche

1. Diebstahlsicherung für ein Fahrrad (1) mit einem Rahmenteil (2) und einem Lenkstangenteil (4), das so montiert ist, dass es um eine Achse im Verhältnis zum Rahmenteil (2) gedreht werden kann, welche Sicherung ein erstes und ein zweites jeweils am Rahmenteil (2) und am Lenkstangenteil (4) montiertes Sicherungsteil (52, 53) sowie ein am einen Sicherungsteil (52) angeordnetes Schloss (12) aufweist, mit dessen Hilfe das zweite Sicherungsteil (53) durch Einschieben eines Verriegelungsstifts (18) in ein Schliessloch (20) im genannten Teil verschliessbar ist, wobei die beiden Sicherungsteile (52, 53) einander gegenüberliegende, auf einer Drehfläche befindliche und jeweils eine mit der Drehachse des Lenkstangenteils (4) zusammenfallende Achse aufweisen, und auf der zweiten Sicherungsfläche mindestens eine bogenförmig gekrümmte Zunge und in der ersten Sicherrungsfläche eine bogenförmig gekrümmte und zur Zunge komplementäre, an ihren beiden Enden offenen Nut (25) ausgebildet sind, die mit einander in Eingriff treten können und ein axiales Entfernen der beiden Sicherungsteile (52, 53) von einander verhindern, und wobei das Fahrrad (1) ein oberes und ein unteres Kugellager (jeweils 6 und 7) aufweist, durch die der Steuerkopfschaft des Lenkstangenteils im Lagerungsrohr des Rahmenteils schwenkbar gelagert ist, **dadurch gekennzeichnet**, dass das erste und zweite Sicherungsteil (52, 53) mit der jeweils oberen und unteren Buchse (50 bzw. 51) des unteren Kugellagers (7, 54) der Steuerkopfsäule (3) einstückig ausgebildet sind.

2. Diebstahlsicherung nach Anspruch 1, **dadurch gekennzeichnet**, dass jede der beiden Drehflächen (22, 23) eben ausgebildet ist.

3. Diebstahlsicherung nach Anspruch 1 oder 2, **dadurch gekennzeichnet**, dass ein dieser zugeordnetes Anschliesskabel (55) beispielsweise in der Form einer Kette oder eines Drahts zum Anketten des Fahrrads an ein stationäres Objekt, und dass das Anschliesskabel zumindest an einem Ende eine Verschlussvorrichtung (57, 58) zum Durchführen durch ein Passageloch (59) im ersten Sicherungsteil (52) aufweist, dass das zweite Sicherungsteil (53) und die Verschlussvorrichtung (57, 58) so ausgebildet sind, dass die Verschlussvorrichtung durch ein Passageloch (60, 61) im zweiten Sicherungsteil (53) geführt werden kann, wenn die beiden Sicherungsteile aus der Schliessposition im Verhältnis zu einander um einen Winkel versetzt sind, nicht aber zurückgezogen werden kann, wenn die beiden Sicherungsteile anschliessend in die Schliessposition gedreht werden.

4. Diebstahlsicherung nach Anspruch 3, **dadurch gekennzeichnet,** dass die Verschlussvorrichtung (57, 58) aus einem vorzugsweise zylindrischen Verschlussstift mit einem Stiftteil und einem grösseren Kopf (58) am Ende des Stifts besteht, dass im ersten und zweiten Sicherungsteil (52, 53) jeweils eine erste und eine zweite durchgehende Öffnung (59, 60) ausgebildet sind, die beide einen grösseren Durchmesser haben als der Kopf (58) des Verschlussstifts und in einer Winkelstellung mit einander fluchten, in der die beiden Sicherungsteile (52, 53) noch nicht die Schliessposition erreicht haben, dass die zweite durchgehende Öffnung (60) in einem bogenförmig gekrümmten Schlitz (61) mit einer grösseren Breite als dem Durchmesser des Schafts (57) und einer geringeren Breite als dem Durchmesser des Kopfs (58) endet, und dass der Schlitz (61) zumindest so lang bemessen ist, dass sein verschlossenes Ende in der Verschlussstellung am Schaft (57) des durch die durchgehenden Öffnungen (59, 60) geführten Verschlussstifts anliegt, wenn dieser Schaft (57) an der vom Schlitz (61) abgekehrten Seite der ersten durchgehenden Öffnung (59) anliegt.

## Revendications

1. Organe de protection contre le vol d'une bicyclette (1) ayant une partie de cadre (2) et une partie (4) de guidon, montée afin qu'elle puisse être tournée autour d'un axe par rapport à la partie de cadre (2), le dispositif de protection contre le vol comprenant une première et une seconde partie (52, 53) de sécurité qui sont montées sur la partie de cadre (2) et sur la partie de guidon (4) respectivement, ainsi qu'une serrure (12) placée sur l'une des parties de sécurité (52) qui peut pivoter et pouvant bloquer la seconde partie de sécurité (53) par déplacement d'une broche de blocage (18) dans un trou de serrure (20) formé dans ladite partie, des faces opposées de sécurité (22, 23) étant disposées sur les deux parties de sécurité (52, 53) et étant situées sur une surface de rotation, chacune avec un axe commun à l'axe de rotation de la partie de guidon (4), et en ce qu'une languette courbe et bombée au moins est formée sur la seconde face de sécurité, et une gorge courbe et bombée (25) est formée sur la première face de sécurité et, par rapport à la languette, a une forme complémentaire, la gorge débouchant aux deux extrémités et pouvant coopérer avec la languette (24) pour empêcher une extraction axiale des deux parties de sécurité (52, 53) l'une de l'autre, et la bicyclette (1) possède un roulement à billes supérieur et un roulement à billes inférieur (6, 7) grâce auxquels la tige de la partie de guidon peut tourillonner dans le tube de support de la partie de cadre, caractérisé en ce que la première et la seconde partie de sécurité (52, 53) sont réalisées afin qu'elles soient solidaires des manchons supérieur et inférieur (50, 51) respectivement du roulement à billes inférieur (7, 54) de la colonne de direction (3).

2. Organe de protection contre le vol selon la revendication 1, caractérisé en ce que chacune des deux surfaces (22, 23) de rotation est un plan.

3. Organe de protection contre le vol selon la revendication 1 ou 2, caractérisé en ce qu'un câble de blocage (55) appartient à l'organe de protection contre le vol et a la forme par exemple d'une chaîne ou d'un fil destiné à relier la bicyclette à un objet fixe, et en ce que le câble de blocage à une extrémité au moins comporte un dispositif de blocage (57, 58) destiné a' passer dans un trou de passage (59) de la première partie de sécurité (52) si bien que la seconde partie de sécurité (53) et le dispositif de blocage (57, 58) sont réalisés afin que le dispositif de blocage puisse être guidé dans un trou de passage (60, 61) de la seconde partie de sécurité (53) lorsque les deux parties de sécurité sont décalées angulairement mutuellement par rapport à la position de blocage, mais ne puisse pas être retiré lorsque les deux parties de sécurité sont ensuite tournées en position de blocage.

4. Organe de protection contre le vol selon la revendication 3, caractérisé en ce que le dispositif de blocage (57, 58) est constitué d'une broche de blocage de préférence cylindrique ayant une tige (57) et une tête plus grosse (58) placée à l'extrémité de la tige, une première et une seconde ouverture débouchante (59, 60) étant formées dans la première et la seconde partie de sécurité (52, 53) respectivement et ayant toutes deux un diamètre supérieur à celui de la tête (58) de la broche de blocage et se trouvant au même niveau dans une position angulaire dans laquelle les deux parties de sécurité (52, 53) n'ont pas encore atteint la position de blocage, en ce que la seconde ouverture débouchant (60) se termine par une fente courbe et bombée ayant une largeur supérieure au diamètre de la tige (57) et inférieure au diamètre de la tête (58), et en ce que la fente (61) a au moins une longueur telle que son extrémité fermée en position de blocage est en butée contre la tige (57) de la broche de blocage qui a été conduite dans les ouvertures débouchantes (59, 60), lorsque cette tige (57) est en butée du côté opposé à la fente (61) dans la première ouverture débouchante (59).
